# EUROPÄISCHE PATENTSCHRIFT

(11) **EP 1 922 128 B1**
(45) Veröffentlichungstag und Bekanntmachung des Hinweises auf die Patenterteilung: **08.02.2012**
(21) Anmeldenummer: 05794196.5
(22) Anmeldetag: 08.09.2005
(51) Int. Cl.: B01D 39/00, B01D 53/84, B01D 53/85

(54) **ELEMENT ZUR REDUZIERUNG DES FEINSTAUBGEHALTS IN DER LUFT DURCH DIE VERWENDUNG VON MOOSEN UND/ODER FLECHTEN**
ELEMENT FOR REDUCING THE PARTICULATE MATTER CONTENT OF AIR BY THE USE OF MOSSES AND/OR LICHENS
ELEMENT POUR LA REDUCTION DE LA QUANTITE DE PARTICULES FINES PRESENTES DANS L'AIR EN UTILISAT DE MOUSSES ET/OU DE LICHENS

(43) Veröffentlichungstag der Anmeldung: 21.05.2008
(73) Patentinhaber: Poerschke, Ulrich, 38154 Königslutter-Lelm (DE)
(72) Erfinder: BEHRENS, Wolfgang, 27243 Gross Ippener (DE)
(74) Vertreter: Körner, Peter
(86) Internationale Anmeldenummer: PCT/DE2005/001570
(87) Internationale Veröffentlichungsnummer: WO 2007/028348

(56) Entgegenhaltungen:
- EP-A- 1 350 426
- US-A- 5 476 523
- US-A1- 2003 224 507

## Beschreibung

Die Erfindung betrifft ein Element zur Reduzierung des Feinstaubgehalts in der Luft,

In Europa wurden mit der Richtlinie 1999/30/EG des Rates vom 22. April 1999 Grenzwerte für Schwefeldioxid, Stickstoffdioxid und Stickstoffoxide, Partikel und Blei In der Luft festgelegt.

Bereits jetzt zeigt sich, dass die bisherigen Maßnahmen zur Einhaltung der in der Sichtlinie festgesetzten Grenzwerte für Feinstaub nicht ausreichen.

Die Definition des Feinstaubs geht zurück auf den im Jahre 1987 eingeführten "National Air Quality Standard for Particulate Matter", auch PM-Standard genannt, der USamerikanischen Umweltschutzbehörde "Environmental Protection Agency", EPA. In n der amerikanischen Richtlinie wurde der so genannte Standard PM₁₀ definiert, für den seit Anfang 2005 auch in der Europäischen Union ein Grenzwert einzuhalten ist. Unter der Bezeichnung PM₁₀ versteht man Partikel mit einem aerodynamischen Durchmesser kleiner gleich 10 Mikrometer. Gemäß Richtlinie 1999/30/EG werden unter PM₁₀ die Partikel verstanden, die einen größenselktierenden Lufteinlass passieren, der für einen aerodynamischen Durchmesser von 10 µm eine Abscheidewirksamkeit von 50 % aufweist.

Feinstaub kann sowohl aus natürilchen als auch aus anthropogenen Quellen stammen. Welche Quelle an welchem Ort dominiert, hängt von den jeweiligen örtlichen Gegebenheiten ab. Hauptverursacher des anthropogenen Anteils am Feinstaub sind beispielsweise in Deutschland:
- die Industrie: 60 kt/a (35,1%)
- Privathaushalte und Kleinverbraucher: 33 kt/a (19,3%)
- Straßenverkehr (ohne Abrieb): Dieselmotoren: 29 kt/a (17,0%)
- Elektrizitäts- und Fernheizwerke: 19 kt/a (11,1%)
- übriger Verkehr: 16 kt/a (9,4%)
- Schüttgutumschlag: 8 kt/a (4,7%)
- Industriefeuerungen: 6 kt/a (3,5%)

Beim oben genannten Anteil des Straßenverkehrs sind der Abrieb von Reifen, Bremsbelägen und Straßenasphalt nicht berücksichtigt.

Insbesondere in den Städten beträgt der Anteil des Verkehrs an den Feinstaubemissionen deutlich über 50 Prozent.

In Innenräumen trägt insbesondere der Rauch von Zigaretten zur Feinstaubbelastung bei.

Zu den natürlichen Staubquellen zählen:
- Partikelneubildung aus Vorläufern in der Atmosphäre
- Kleinstlebewesen und Teile von ihnen, Pollen
- die Erosion von Gesteinen

In der europäischen Richtlinie 1999/30/EG ist folgende Grenzwertregelung getroffen:
1. Der ab dem 1. Januar 2005 einzuhaltende Tagesmittelwert für PM₁₀ beträgt 50 µg/m³ bei 35 zugelassenen Überschreitungen im Kalenderjahr.
2. Ab dem Jahre 2005 beträgt der Jahresmittelwert für PM₁₀ 40 µg/m³.

Um diese Grenzwerte einhalten zu können, werden in den einzelnen europäischen Ländern unterschiedliche Strategien verfolgt: In London hat eine City-Maut zu 18% weniger Verkehr und 12% weniger Feinstaub geführt. In Italien gibt es Fahrverbote. In Österreich gibt es Subventionen für Partikelfilter bei Dieselfahrzeugen sowie Förderung von Biodiesel. Deutschland plant Subventionen für Partikelfilter, eine emissionsabhängige Maut für Lkw sowie Fahrverbote in Städten für nicht als emissionsarm gekennzeichnete Fahrzeuge.

In der Richtlinie 1999/30/EG ist ebenfalls festgelegt, dass am 1. Januar 2010 folgende Verschärfungen der Grenzwerte in Kraft treten:
1. Der einzuhaltende Tagesmittelwert für PM₁₀ beträgt 50 µg/m³ bei nur noch 7 zugelassenen Überschreitungen im Kalenderjahr.
2. Der Jahresmittelwert beträgt für PM₁₀ nur noch 20 µg/m³.

Der Staub wird heute im Wesentlichen für die Auswirkungen von Luftverschmutzungen auf die Gesundheit verantwortlich gemacht. Diese Auswirkungen reichen von Atemwegsbeschwerden wie z.B. Husten bis hin zu asthmatischen Anfällen. Das Ausmaß der Auswirkung von Partikeln auf die Atemwege hängt, neben der Toxizität der Partikel, auch von der Größe der Partikel ab: je kleiner ein Partikel ist, desto tiefer kann es in die Lunge eindringen. Feinstaub PM₁₀ erreicht teilweise die Lunge, da die Filterwirkung des Nasen-Rachenraumes für feine Partikel mit weniger als 10 Mikrometer Durchmesser nicht ausreicht. So gelangen ultrafeine Teilchen mit einem Durchmesser unter 0,1 µm bis in die Lungenbläschen und werden von dort nur sehr langsam oder gar nicht wieder entfernt.

Die Belastung der Luft mit winzigen Staubteilchen ist heute eine der größten Herausforderungen. Vor allem Städte und verkehrsnahe Gebiete leiden unter zu hohen Feinstaub-Belastungen. In diesen Gebieten liegen die Jahresmittelwerte für Feinstaub ganzjährig über den geltenden Grenzwerten, und auch die Tagesmittelwerte werden häufig und zum Teil massiv überschritten.

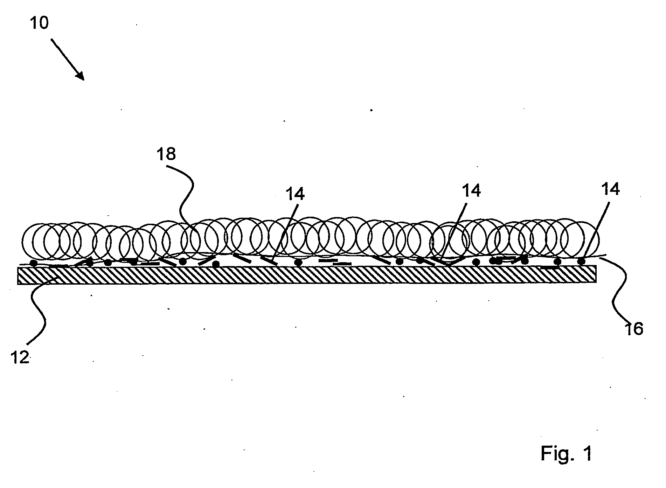

US 2003/0224507 A1 offenbart eine Vorrichtung, mit der abgestandene Luft in Innenräumen aufbereitet wird. Wie in Fig. 1 gut zu erkennen ist, umfasst die Vorrichtung eine Luftkammer mit einer Vorderwand aus einem luftdurchlässigen Material, auf dem Pflanzen wachsen, deren Wurzeln in das Material infiltrieren. Das Material kann aus Kokosnuss-Fasern bestehen. Bei den Pflanzen kann es sich auch um Moose handeln. Das Material samt Pflanzen und Wurzeln wird permanent von Raumluft durchströmt, indem ein Gebläse die Raumluft in die Luftkammer saugt und an anderer Stelle wieder abgibt. Ferner ist noch ein Wasserkreislauf vorgesehen, der einerseits die Pflanzen, insbesondere deren Wurzeln, bewässert und mit erforderlichen Nährstoffen versorgt und andererseits Staub aus der Luft sorbiert und zu den Wurzeln der Pflanzen leitet. Letzteres erfolgt dadurch, dass permanent Wasser auf das Material gegeben wird. Da das Material im Wesentlichen vertikal angeordnet ist, durchläuft das Wasser das Material von oben nach unten und bildet quasi einen Wasservorhang. Schließlich wird das Wasser unten in einem Wasservorratsbehälter wieder aufgefangen. An den Wurzeln der Pflanzen sind Kolonien von Mikroben angesiedelt, welche die Luftverunreinigungen vernichten.

EP 1 350 426 A1 offenbart ein fixiertes Moospflanzenprodukt. Dieses Moospflanzenprodukt ist quasi ein Laminat, das aus zwei Schichten durch Verpressen miteinander hergestellt ist. Beide Schichten sind aus speziellen Zubereitungen hergestellt. Eine der Schichten enthält zusätzlich Moospflanzen. In Fig. 1 (4) ist ein derartiges Produkt aus der Moospflanzen enthaltenen Schicht und der keine Moospflanzen enthaltenen Schicht dargestellt. Diverse Ausgestaltungen des Produkts sind in den übrigen Figuren dargestellt. Das Produkt kann beispielsweise auf eine Betonoberfläche gelegt werden, wobei Mittel zur Befestigung des Produkts auf der Oberfläche vorgesehen sein können. Das Produkt soll die Umwelt verbessern. Verschiedene in EP 1 350 426 A1 genannte Moose, die in dem Produkt enthalten sein können, kommen in Frage.

Der Erfindung liegt die Aufgabe zugrunde, weitere Maßnahmen bereitzustellen, um den Feinstaubgehalt der Luft zu reduzieren.

Diese Aufgabe wird mit einem Element gemäß den Merkmalen des Anspruchs 1 gelöst. Weiterbildungen und vorteilhafte Ausgestaltungen der Erfindung ergeben sich aus den Unteransprüchen.

Der erfindungsgemäßen Verwendung von Moosen und/oder Flechten als Mittel zur Reduzierung des Feinstaubgehalts in der Luft liegt die Erkenntnis zugrunde, dass sich Moose im Gegensatz zu Blütenpflanzen, die Wasser und Nährstoffe aus der Erde aufnehmen, aus der Atmosphäre ernähren. Moose nehmen atmosphärisches Wasser, insbesondere Regen und Tau, sowie die darin gelösten Nährstoffe direkt über ihre Oberfläche auf. Eine weitere Quelle der Nährstoffaufnahme sind Stäube. Stäube werden mechanisch zwischen den Moosblättchen festgehalten. Dazu gehören auch besonders Feinstäube. Feinstäube gehören zu den so genannten Schwebstäuben, die aufgrund ihres Gewichtes und ihrer Größe von < 10 µm nicht absinken und erst durch nasse Deposition, z.B. bei Regen oder auch schon bei Nebeltröpfchenbildung, niedergeschlagen werden. Werden diese Feinstäube durch Windbewegung In Kontakt mit Moosen gebracht, so bleiben sie zwischen den Moospflanzen hängen.

Diese Filterwirkung ist einerseits eine rein physikalische. Man könnte diese Wirkung im Prinzip auch durch eine Struktur ähnlich einem Teppichflor erreichen, jedoch in weitaus geringerem Umfang. Die Moospflanzen haben im Gegensatz zu solchen Kunstoberflächen durch ihre eng gestellten Blättchen eine enorm vergrößerte Oberfläche: Sie sind dicht mit kleinen Blättchen besetzt. Ein Moosblättchen mit Ober- und Unterseite hat eine Oberfläche von 6 mm². Auf eine 1 cm lange Moospflanze kommen ca. 80 Blätter = 480 mm², auf 1 cm kommen ca. 6 Moospflanzen, d.h. 2.880 mm² pro cm² (100 mm²). Die Oberflächenvergrößerung von Moosen beträgt also knapp das 30fache. Auf den Kublkzentimeter bezogen sind das 17,280 mm² Oberfläche.

Besonders auf Gestein, auf Mauern und an Borke wachsende Moose akkumulieren über die Zeit auf diese Weise Stäube, die sie festhalten, wobei sie an den Spitzen immer weiter wachsen und neuen Speicherplatz schaffen. Der auf einem Moosblatt haftende Feinstaub kann rasterelektronenmikroskopisch nachgewiesen werden.

Die genannte Filterwirkung beruht andererseits auf Anziehungskräfte aufgrund verschiedenartiger Ladungen. Es hat sich herausgestellt, dass zumindest Teile des Feinstaubs auch dadurch auf den Moosen und Flechten festgehalten werden bzw. auf diesen quasi haften, dass diese Teile negativ geladen sind, während die Moose und Flechten selbst eine positiv geladene Oberfläche aufweisen. Ein Ablösen des derart auf der Oberfläche der Moose und Flechten festgehaltenen Feinstaubs durch Wind oder Niederschlag wird erheblich erschwert.

Der Anteil an chemischen Elementen im Feinstaub lässt sich in einer Röntgenspektral(EDX)-Analyse nachweisen.

Darüber hinaus liegt der Erfindung die Erkenntnis zugrunde, dass Feinstäube nicht nur gefiltert und festgehalten werden, sondern zum großen Teil von den Moosen aufgenommen und in Phytomasse umgewandelt werden. Das bezieht sich auf alle anorganischen Stäube wie Gesteinsstaube. Gesteinsstaube sind Teil des natürlichen Feinstaubgehalts der Luft, entstehen jedoch auch anthropogen, z.B. durch Straßenabrieb. Solche mineralischen Feinstäube werden durch Ionenaustausch von den Moosen chemisch gebunden und dadurch nicht nur gefiltert, sondern auch beseitigt.

Organische Feinstäube werden in dieser biologischen Oberfläche von Bakterien zersetzt. Rasterelektronenmikroskopische Untersuchungen zeigen, dass Bakterien in großer Zahl die Oberfläche der Moose besiedeln. Sie zersetzen die dort anfallenden organischen Verbindungen. Zu diesen organischen Bestandteilen der Luft gehören neben Pollen oder Sporen auch Erdölprodukte oder deren Verbrennungsrückstände, die von Bakterien abgebaut werden. Die zersetzten Produkte werden wiederum von den Moosen aufgenommen und in Phytomasse verwandelt.

Vorteilhaft haben Moose auch eine chemische Filterwirkung. Die Nährstoffe werden von Moosen über die gesamte Oberfläche aufgenommen. Um diese z.B. aus dem Regenwasser aufnehmen zu können, bedienen sich die Moose des so genannten Ionenaustausches, genauer des Kationenaustausches. Die bereits genannten riesigen Oberflächen der Moose bewirken eine hohe Ionenaustauschkapazität und damit eine hohe Bindung von im Regenwasser enthaltenen Substanzen.

Auf dem Prinzip des Ionenaustauschs beruht auch die Fähigkeit der Moose, Schwermetallstäube zu filtern oder Radionuklide aufzunehmen. Auch Schadstoffe wie in Wasser gelöstes Schwefeldioxid in Form von Schwefelsäure bzw. Schwefliger Säure sowie aufgrund ihrer starken Düngewirkung umweltbedenkliche Verbindungen wie in Wasser gelöste Stickoxide in Form von Salpetriger Säure oder Salpetersäure, Ammonium-Verbindungen wie Ammoniumnitrat oder Ammoniak werden so entfernt.

Nach dem Rückgang der Schwefeldioxid-Emissionen tragen heute Stickstoffemissionen besonders zur Luftbelastung bei. Stickstoffquellen sind dabei insbesondere Stickoxide (NOₓ) und Ammoniak (NH₃). Beide Verbindungen sind recht instabil und verbinden sich in der Luft, z.B. Ammoniak

| | |
|---|---|
| mit H₂S0₄ | zu (NH₄)₂S0₄ |
| mit H₂NO₃ | zu NH₄NO₃ |
| mit OH | zu NH₂ + H₂0 |
| mitHNO₂ | zu NH₄NO₂ |
| mit HNO₃ | zu NH₄NO₃ |

Die resultierenden Verbindungen (Ammoniumsulfat, Ammoniumnitrit, Ammoniumnitrat) sind Stickstoffdünger, wie sie auch in der Landwirtschaft eingesetzt werden. Dieser "Luftdünger" trägt erheblich zur Eutrophierung unserer Umwelt bei, was sich im Verschwinden vieler Pflanzenarten nährstoffarmer Standorte und dem Vordringen weniger nitrophiler Arten ausdrückt. Neben der Verringerung der Artendiversität und dem lokalen Aussterben von Pflanzenarten sind aber auch ganze Ökosysteme, insbesondere Kalkmagerrasen, Heiden, Moore, extensives Grünland oder Felskuppenvegetation, betroffen.

Diese Stickstoffverbindungen werden jedoch von Moosen als Nährstoffe genutzt und über den zuvor genannten Ionenaustausch aufgenommen. Damit werden sie der Atmosphäre entzogen, abgeschöpft und zu Phytomasse verwandelt.

Darüber hinaus besitzen Moose vorteilhaft auch eine antimikrobielle Wirkung.

Pathogene Keime in Form von Bakterien oder Pilzsporen werden durch die Luft nicht allein, sondern an größere Partikel, wie Stäube oder Aerosole, gebunden transportiert. Diese gelangen durch trockene oder nasse Deposition auf die Moose. Durch die mechanische Filterwirkung der Moose werden diese Partikel im Moos festgehalten.

Für Innenräume bedeutet dies, dass Bakterien an der Vermehrung, also der Teilung, und Pilzsporen am Auskeimen gehindert werden. Die Innenluft wird also von Keimen gereinigt. Bei gewöhnlichen Filtersubstanzen kann es als Folge zu einer Massenvermehrung der Keime kommen, die zu einer epidemieartigen Verbreitung führen. Besonders Filteranlagen in Klimaanlagen sind davon betroffen. Aufgrund der antimikrobiellen Wirkung der Moospflanzen können die pathogenen Keime sich in den Moosfiltern nicht vermehren. Moose führen also vorteilhaft zu einer Reinigung der Luft von Krankheitskeimen.

Eine Weiterbildung der Erfindung sieht vor, dass die Moose aus den systematischen Gruppen der akrokarpen und pleurokarpen Laubmoose ausgewählt werden, die aus den Gattungen Brachythecium, Bryum, Barbula, Funaria, Dicranoweisia, Dicranum, Grimmia, Ceratodon, Homalothecium, Tortula, Abietinella, Hypnum, Rhytidium, Racomitrium und Polytrichum bestehen, und vorzugsweise Mischungen aus akrokarpen Moosen, nämlich Bryum, Barbula, Dicranoweisia, Dicranum, Funaria, Grimmia, Ceratodon, Polytrichum und/oder Tortula, besonders bevorzugt Mischungen aus pleurokarpen Moosen, nämlich Hypnum, Rhytidium, Brachythecium und/oder Homalothecium, sind.

Weiterhin ist vorgesehen, dass die Moose aus der Gruppe ausgewählt werden, die aus den Gattungen Hypnum, Tortula, Brachythecium und Bryum besteht, und vorzugsweise Mischungen aus Bryum und Tortula, besonders bevorzugst Mischungen aus Hypnum und Brachythecium sind.

Es hat sich herausgestellt, dass sich diese Moose bzw. Mischungen besonders gut zur Lösung der Aufgabe in Innenräumen, also als Innenbegrünung, eignen.

Gemäß einer vorteilhaften Ausgestaltung der Erfindung werden die Moose aus der Gruppe ausgewählt, die aus den Gattungen Ceratodon, Barbula, Bryum und Funaria besteht, und vorzugsweise Polytrichum, besonders bevorzugt Mischungen aus Ceratodon, Barbula, Bryum und Funaria, sind.

Es hat sich herausgestellt, dass sich diese Moose bzw. Mischungen besonders gut zur Lösung der Aufgabe im Freien, also als Außenbegrünung, eignen.

Außerdem ist vorgesehen, dass die Moose aus der Gruppe ausgewählt werden, die aus den Gattungen Abietinella, Hypnum, Rhytidium, Racomitrium, Grimmia und Homalothecium besteht, und vorzugsweise Mischungen aus Grimmia und Racomitrium, besonders bevorzugt Mischungen aus Rhytidium, Abietinella und Homalothecium sind.

Es hat sich herausgestellt, dass sich diese Moose bzw. Mischungen besonders gut zur Lösung der Aufgabe an sonnigen Standorten im Freien, also auch als Außenbegrünung, eignen.

Weiterhin ist vorgesehen, dass die Moose aus der Gruppe ausgewählt werden, die aus den Gattungen Dicranoweisia, Dicranum, Ceratodon und Bryum besteht, und vor zugsweise Mischungen aus Dicranoweisia und Dicranum, besonders bevorzugt Mischungen aus Bryum und Ceratodon sind.

Es hat sich herausgestellt, dass sich diese Moose bzw. Mischungen besonders gut zur Lösung der Aufgabe an schattigen Standorten im Freien, also ebenfalls als Au-βenbegrünung, eignen.

Eine vorteilhafte Ausgestaltung der Erfindung sieht vor, dass die Flechten aus der Gruppe ausgewählt werden, die aus den Gattungen Cladina, Cladonia, Xanthoria, Parmelia, Physcia, Hypogymnia, Peltigera, Evernia, Pseudevernia, Ramalina und Cetraria besteht.

Vorteilhaft werden die Flechten aus der Gruppe ausgewählt, die aus den Gattungen Cladina und Cladonia besteht.

Es hat sich herausgestellt, dass sich diese Flechten besonders gut zur Lösung der Aufgabe in Innenräumen, also als Innenbegrünung, eignen.

Zweckmäßigerweise werden die Flechten aus der Gruppe ausgewählt, die aus den Gattungen Cladina, Cladonia, Xanthoria, Hypogymnia und Parmelia besteht, und vorzugsweise Mischungen aus Xanthoria, Hypogynmnia und Parmelia, besonders bevorzugt Mischungen aus Cladonia und Cladina sind.

Es hat sich herausgestellt, dass sich diese Flechten bzw. Mischungen besonders gut zur Lösung der Aufgabe an sonnigen Standorten im Freien, also als Außenbegrünung, eignen.

Vorteilhaft werden die Flechten aus der Gruppe ausgewählt, die aus den Gattungen Peltigera, Pseudevernia, Ramalina und Evernia besteht, und vorzugsweise Peltigera, besonders bevorzugt Mischung aus Pseudevernia, Ramalina und Evernia sind.

Es hat sich herausgestellt, dass sich diese Flechten bzw. Mischungen besonders gut zur Lösung der Aufgabe an luftfeuchten Standorten im Freien, also auch als Außenbegrünung, eignen.

Vorzugsweise werden die Flechten aus der Gruppe ausgewählt, die aus den Gattungen Physcia, Parmelia, Phaeophyscia und Xanthoria besteht, und vorzugsweise Mischungen aus Phaeophyscia und Parmella, besonders bevorzugt Mischungen aus Xanthoria und Physcia sind.

Es hat sich herausgestellt, dass sich diese Flechten bzw. Mischungen besonders gut zur Lösung der Aufgabe in stärker stickstoffbelasteten Gebieten im Freien, also ebenfalls als Außenbegrünung, eignen.

Die Erfindung betrifft ein Element zur Reduzierung des Feinstaubgehalts in der Luft.

Erfindungsgemäß handelt es sich hierbei um eine auf eine plan liegende oder geneigte, künstliche oder natürliche Fläche aufgebrachte oder aufbringbare Unterlage, auf und/oder in der Moose und/oder Flechten bzw. deren Sprossen und/oder Sporen angeordnet und gegen Abtragung durch Wind, Wasser und/oder Schädlinge fixiert sind.

Mit einem derartigen Element wird eine Reduzierung des Feinstaubgehalts In der Luft erreicht, wobei sich die Eigenschaft der Moose und Flechten, Feinstaub aus der Luft zu filtern, zunutze gemacht wird. Derartige Elemente können besonders einfach dort angewendet werden, wo der der Feinstaubgehalt in der Luft besonders hoch ist und insbesondere eine Überschreitung der in der Richtlinie 1999/30/EG festgelegten Grenzwerte zu befürchten ist. Dies wird in erster Linie in den Städten sein, in denen die Feinstaubbelastung durch den Straßenverkehr besonders hoch ist, oder in den Innenräumen, in denen die Feinstaubbelastung durch Zigarettenrauch besonders hoch ist.

Das erfindungsgemäße Element ist eine biologische, lebende Oberfläche. Aus diesem Grund hat ein solches Element vielerlei vorteilhafte Eigenschaften, welche "künstliche", tote, nicht lebende Oberflächen nicht besitzen. Bei einer Bepflanzung mit Moosen haben solche Elemente zudem spezifische Eigenschaften, welche z. B. mit Sedum u.a. bepflanzte Elemente nicht haben.

Grund dafür ist der elementare Unterschied zwischen Blütenpflanzen und Moosen. Blütenpflanzen sind homoiohydrische, also gleichfeuchte Pflanzen. Sie sind darauf angewiesen, auf Dauer eine positive Wasserbilanz zu halten. Sie nehmen das benötigte Wasser und die benötigten Nährstoffe aus dem Untergrund über Wurzeln auf. Über den Transpirationssog wird das überschüssige Wasser in Form von Wasserdampf über die Spaltöffnungen wieder abgegeben. Sukkulente Blätter erlauben Sedum und ähnlichen Arten, die Wasserabgabe zu drosseln und diese Extrem-Standorten wie Dächern anzupassen, so dass diese Pflanzen dort überdauern können. Hierbei wird also die mikroklimatisch wichtige Wasserdampfabgabe minimiert. Als CAM-Pflanzen mit Crassulaceae Acid Metabolism werden dabei die Spaltöffnungen an trockenen Tagen über Tag geschlossen, um zu starke Wasserverluste zu vermeiden. In der kühleren Nacht wird Kohlendioxid über die dann offenen Spaltöff nungen in der Pflanze aufgenommen und dort in Form von Malat gespeichert. Das Malat bildet dann über Tag die verfügbare Kohlenstoffquelle für die Assimilation, so genannter diurnaler Säurerhythmus.

Moose besitzen im Gegensatz zu Blütenpflanzen keine Wurzeln. Sie nehmen stattdessen Wasser und Nährstoffe über die Oberfläche auf. Dabei können sie bei Luftfeuchte über 80% auch Wasserdampf aufnehmen. Bei einsetzenden Niederschlägen werden sie innerhalb von Sekunden stoffwechselaktiv und turgeszent. Flüssiges Wasser wird also unmittelbar und sofort aufgenommen. Assimilieren können Moose nur, solange sie feucht sind. Daher speichern sie entsprechende Mengen von Wasser, die sie anschließend langsam wieder abgeben. Die benötigten Nährstoffe nehmen die Moose aus der. Luft auf. In Ermangelung von Wurzeln nehmen sie diese über die gesamte Oberfläche auf, entweder in Form von in Regenwasser gelösten Substanzen oder über Stäube. Dabei filtern sie einerseits in Regenwasser gelöste Substanzen, z. B. Schadstoffe, aus der Luft, andererseits akkumulieren sie sowohl durch trockene als auch nasse Deposition Stäube aus der Luft. Das geschieht durch Kationenaustausch. Dabei werden Kationen auf der Blattoberfläche der Moose gegen Wasserstoffionen ausgetauscht.

Da Moose und/oder Flechten bzw. deren Sprossen und/oder Sporen keine Wurzeln haben, wird durch die Fixierung gegen Abtragung durch Wind, Wasser und/oder Schädlinge erreicht, dass die Moose und/oder Flechten bzw. deren Sprossen und/oder Sporen gleichmäßig verteilt auf der Unterlage angeordnet bleiben und sich dort entwickeln können.

Vorteilhaft ist hierbei, dass Moose und/oder Flechten bzw. deren Sprossen und/oder Sporen über einen längeren Zeitraum ohne Wasser auskommen können. Sie treten dann in eine natürlich Ruhephase. Sobald sie mit Wasser und Licht in Verbindung kommen, setzt das Wachstum wieder ein. Das bedeutet, dass die Elemente keiner intensiven Pflege bedürfen, da die Moose und/oder Flechten bzw. deren Sprossen und/oder Sporen auch bei Trockenheit überleben.

Im Gegensatz zu Moosen nehmen Blütenpflanzen Wasser durch die Wurzeln auf und geben das Wasser in Form von Wasserdampf über ihre Spaltöffnungen ab. Sie müssen sich also laufend mit Wasser versorgen. An Trockenstandorten, beispielsweise auf Dächern, behelfen sich Sukkulenten damit, Wasser zu speichern und damit Trockenphasen zu überdauern.

Moose werden bei Wasseraufnahme befeuchtet, trocknen jedoch in Trockenphasen ab. Dabei geraten sie in eine Art scheintoten Zustand, der so genannte Anabiose. Bei erneuter Befeuchtung erreichen sie ihre Turgeszenz wieder, teilweise innerhalb von Sekunden. Moose können vorteilhaft auf diese Weise also beliebig lange Trockenphasen überdauern. Diese Trockenphasen sind jedoch mit keinerlei Schädigungen verbunden. Bei den meisten Arten ist dies mit einer Veränderung des Habitus verbunden. Die Moose legen die Blätter an, rollen sie ein und verlieren dabei ihre grüne Farbe. Nur wenige starre Arten behalten auch bei Austrocknung ihre Form und Farbe. Dies kann vorteilhaft als Indikator dafür verwendet werden, die Moose und/oder Flechten bzw. deren Sprossen und/oder Sporen künstlich zu bewässern.

Diese Eigenart ermöglicht es aber auch, die erfindungsgemäßen Elemente industriell zu fertigen, leicht, also ohne Feuchtigkeit, zu transportieren und über einen längeren Zeitraum zwischenzulagern.

Erst wenn das erfindungsgemäße Element auf einer vorgegebenen plan liegenden oder geneigten, künstlichen oder natürlichen Fläche, beispielsweise auf einem Dach eines Gebäudes in einer mit Feinstaub belasteten Stadt oder auf einer Fläche in einem innenraum, aufgebracht und natürlich oder künstlich bewässert wurde, setzt das Wachstum der Moose und/oder Flechten bzw. der Sprossen und/oder Sporen ein.

Die Erfindung sieht gemäß Anspruch 1 vor, dass die Unterlage auf der Fläche durch geeignete Mittel, vorzugsweise durch Verkleben, durch thermische Behandlung oder durch mechanische Verbindungsmittel, befestigt oder befestigbar ist.

Weiterhin ist vorgesehen, dass die Unterlage eine Schicht aus einem wasserabweisenden Material umfasst, wobei die Schicht vorzugsweise eine bituminöse Abdichtung ist.

Gemäß Anspruch 1 ist die Unterlage ein Vegetationsträger, der wenigstens eine Schicht aus einem wasseraufnehmenden und/oder -speichernden Material aus vorzugsweise Vlies oder Steinwolle umfasst.

Dadurch wird eine erhebliche Erhöhung der Wasserspeicherkapazität des Elements erreicht.

Ein Klimaproblem in innerstädtischen Bereichen Ist die schnelle Versickerung des Niederschlagswassers. Durch dichte Bebauung, direkte Einleitung des Wassers in die Kanalisation und Versiegelung der Böden wird Niederschlagswasser umgehend abgeführt. Folgen sind ein ausgesprochen trockenes Stadtklima, was insbesondere wegen der Hitze- und Staubbildung negativ ist. Die Abgabe von Wasserdampf aus den erfindungsgemäßen Elementen über einen längeren Zeitraum führt zu einer deutlichen Erhöhung der relativen Luftfeuchte der Umgebung. Die dabei auftretende Verdunstung großer Mengen von Wasser wirkt abkühlend auf die Umgebungstemperatur. Dadurch werden insbesondere die Effekte des Stadtklimas mit einem besonders im Sommer trocken-heißen Mesoklima gemildert. Höhere Luftfeuchte haben einen positiven gesundheitlichen Effekt und wirken einer Austrocknung der Schleimhäute im Atembereich entgegen.

Die Wasserdampfabgabe erfolgt selbst bei trockener Zimmerluft über einen Zeltraum von mehr als 24 Stunden.

Ist das erfindungsgemäße Element mit einer wasseraufnehmenden und/oder -speichernden Schicht, vorzugsweise aus Vlies oder Steinwolle, versehen, lässt sich die Wasserspeicherung der Moose dadurch verdoppeln. Dies verlängert den Zeitraum der Wasserdampfabgabe wesentlich.

Gemäß einer vorteilhaften Ausgestaltung der Erfindung sind die Moose und/oder Flechten und/oder deren Sprossen und/oder deren Sporen direkt auf der Schicht aus dem wasseraufnehmenden und/oder -speichernden Material angeordnet.

Die Erfindung sieht gemäß Anspruch 1 vor, dass der Vegetationsträger eine Krallschicht zur Fixierung der Moose und/oder Flechten bzw. deren Sprossen und/oder Sporen gegen Abtragung durch Wind, Wasser und/oder Schädlinge umfasst, wobei die Krallschicht vorzugsweise der Schicht aus wasseraufnehmendem und/oderspeicherndem Material aufliegt.

Bei der Krallschicht handelt es sich um eine Schicht, die derart ausgebildet ist, dass sie die Moose und/oder Flechten bzw. deren Sprossen und/oder Sporen gegen Abtragung durch Wind, Wasser und/oder Schädlinge fixiert, sich also quasi krallenartig um die Moose und/oder Flechten bzw. deren Sprossen und/oder Sporen legt. Die Krallschicht ist vorzugsweise als Schlingmatte ausgebildet. Vorzugsweise besteht die Krallschicht aus einem unverrottbaren Material, besonders bevorzugt aus Kunststoff, insbesondere aus Nylon oder Polypropylen. Aber auch Metall ist als Material, vorzugsweise in Form eines Drahtgeflechts, einsetzbar.

Das Prinzip der Krallschicht erlaubt es, das Element auch auf geneigte Flächen wie Dächern oder Wänden aufzubringen, ohne dass Moose und/oder Flechten bzw. deren Sprossen und/oder Sporen abrutschen.

Sie hat zudem den Vorteil, dass die Moose und/oder Flechten stärker mit der Unterlage verhaftet sind als auf einer glatten Oberfläche.

Da die Moose und Flechten keine Wurzeln haben, wird die Vegetation durch die Krallschicht gegen Abtragung durch Wind und Wasser fixiert.

Darüber hinaus verwenden Vögel Moose und Flechten gern als Nistmaterial oder suchen darin nach Futter, was zu erheblichen Schäden am Bewuchs führen kann. Die Krallschicht kann die Zerstörung solcher Moosdecken durch Vögel wesentlich einschränken.

Vorteilhaft sind Moose und/oder Flechten bzw. deren Sprossen und/oder Sporen auf und/oder in der Krallschicht angeordnet.

Hierzu wird die Krallschicht bzw. Schlingmatte mit Fragmenten von Moospflanzen beimpft, welche sich zwischen den Schlingen weiterentwickeln, zu ganzen Pflanzen heranwachsen und schließlich die Matte ganz ausfüllen bzw. bedecken.

Bei diesem Verfahren wird vorzugsweise auf pleurokarpe Laubmoose zurückgegriffen, welche einen niederliegend-deckenförmigen Wuchs haben. Bei ihnen ist auf Grund des waagerechten Wuchses der Höhenzuwachs nicht so schnell und die Erosionsgefahr geringer. Akrokarpe Moose, die auch verwendbar sind, wachsen dagegen polster- oder rasenförmig. Sie haben einen Zuwachs von einigen Millimetern pro Jahr, werden aber im Laufe der Jahre eine Höhe erreichen, die dazu führt, dass zunächst die höheren Polster herausfallen. Die dadurch entstandenen Lücken werden jedoch wieder von der Seite geschlossen.

Zweckmäßigerweise ist die Krallschicht mit einem wasserspeichernden Material wenigstens teilweise verfüllt.

Dadurch wird erreicht, dass die Wasserspeicherung der Moose gesteigert wird.

Eine vorteilhafte Ausgestaltung der Erfindung sieht vor, dass der Vegetationsträger eine Dränageschicht umfasst, wobei die Drainageschicht vorzugsweise unterhalb der Schicht aus wasseraufnehmendem und/oder -speicherndem Material angeordnet.

Eine Weiterbildung sieht vor, dass der Vegetationsträger eine weitere unterhalb der Dränage angeordnete Schicht aus einem wasseraufnehmenden und/oderspeichernden Material zur Kondenswasserbildung umfasst.

Weiterhin ist vorgesehen, dass der Vegetationsträger Saatgut ein- und/oder zweikeimblättriger Pflanzen enthält, welches vorzugsweise in der gleichen Schicht wie die Moose und/oder Flechten bzw. deren Sprossen und/oder Sporen angeordnet ist.

Durch das Saatgut von beispielsweise Sukkulenten, Kräutern und/oder Gräsern kann eine erhebliche Verbesserung des optischen Eindrucks des Elements erreicht werden.

Zusätzlich umfasst der Vegetationsträger gemäß Anspruch 1 eine Papierschicht, die vorzugsweise den Moosen und/oder Flechten bzw. deren Sprossen und/oder Sporen sowie gegebenenfalls dem Saatgut ein- und/oder zweikeimblättriger Pflanzen aufliegt und besonders bevorzugt selbst von einer Krallschicht abgedeckt ist.

Zweckmäßigerweise enthält der Vegetationsträger Nährstoffe, die vorzugsweise in der Schicht aus wasseraufnehmendem und/oder-spelcherndem Material eingebracht sind.

Eine Weiterbildung sieht vor, dass Vegetationsträger wenigstens ein Material zur Brandschutzverbesserung umfasst,

Insbesondere In Trockenphasen kann so die Brandgefahr erheblich herabgesetzt werden.

Ferner ist vorgesehen, dass unterhalb des Vegetationskörpers ein System zur Bewässerung der Moose und/oder Flechten bzw. deren Sprossen und/oder Sporen sowie gegebenenfalls des Saatguts ein- und/oder zweikeimblättriger Pflanzen angeordnet ist.

Dadurch wird das Element unabhängig von der natürlichen Bewässerung und erfüllt seine Aufgabe kontinuierlich.

Vorteilhaft ist vorgesehen, dass die einzelnen Schichten des Elements bzw. dessen Materialien vorzugsweise durch Versteppen miteinander verbunden sind.

Vorteilhaft ist das Element entweder am Einsatzort, vorzugsweise aber an einem anderen Ort herstellbar sowie auch lagerbar und erst bei Bedarf zum Einsatzort transportierbar.

In einer vorteilhaften Ausgestaltung der Erfindung ist die Schicht aus wasserabweisendem Material als unterste Schicht des Vegetationsträgers angeordnet und mit diesem fest verbunden , wobei das Element vorzugsweise im industriellen Maßstab vorfertigbar ist.

Dadurch wird ein Element zu Verfügung gestellt, dass sich auf einfache Weise insbesondere zum Decken von Dächern eignet. Durch das Vorfertigen lässt sich das Element besonders gut-lagern, zum Einsatzort transportieren und besonders einfach auf die vorgegebene Fläche aufbringen. Handelt es sich bei der Schicht aus einem wasserabweisenden Material um bituminöse Abdichtungsbahnen, müssen diese nur noch auf ihrer Unterseite thermisch behandelt und in herkömmlicher Weise auf die vorgegebene Fläche aufgelegt werden. Auf diese Weise lässt sich das Element besonders einfach fixieren.

Weiterhin ist vorgesehen, dass sich das Element bis zur seiner Aufbringung auf die Fläche und anschließender Bewässerung am Einsatzort in einem unbegrünten Zustand befindet.

Vorzugsweise ist das Element mattenartig ausgebildet und zur Lagerung und zum Transport aufrollbar,

Gemäß einer Weiterbildung ist die Fläche ein Dach, eine Mauer oder ein Gleisbett.

Zur Reduzierung des Feinstaubgehaltes in der Luft können Moose und/oder Flechten bzw. deren Sprossen und/oder Sporen auf eine vorgegebene Fläche gestreut und gegen Abtragung durch Wind, Wasser und/oder Schadfraß fixiert werden, oder es kann ein Element nach einem der Ansprüche 1 bis 27 hergestellt und auf einer vorgegebenen Fläche befestigt werden.

Weiterhin können die Moose und/oder Flechten bzw. deren Sprossen und/oder Sporen bewässert werden.

Die Moose und/oder Flechten bzw. deren Sprossen und/oder Sporen oder das Element nach einem der Ansprüche 1 bis 27 können in einem Innenraum oder im Freien auf der vorgegebenen Fläche angeordnet worden.

Nachfolgend wird die Erfindung anhang eines Ausführungsbeispiels erläutert, das in der Zeichnung dargestellt ist. In dieser zeigt:
- Fig. 1: einen schematischen Ausschnitt eines erfindungsgemäßen Elements im Querschnitt.

Das in Fig. 1 dargestellte Element 10 zur Reduzierung des Feinstaubgehalts in der Luft ist ein mattenartiger Vegetationsträger, der aus einer unteren Schicht aus einem wasseraufnehmenden und -speichernden Vlies 12, auf welche Sprossen 14 und/oder Sporen14 von Moosen gleichmäßig aufgestreut sind, einer die Sprossen 14 und/oder Sporen 14 der Moose abdeckenden Papierschicht 16 sowie einer auf dieser Papierschicht 16 angeordneten Krallschicht 18 in Form einer Nylonschlingmatte besteht.

Die einzelnen Schichten 12, 16 und 18 des Elements 10 sind durch Versteppen miteinander verbunden.

Das Element 10 Ist auf eine hier nicht dargestellte, plan liegende oder geneigte, künstliche oder natürliche Fläche, insbesondere auf ein Dach, aufbringbar. Vorzugsweise wird das Element 10 mit einer auf der Fläche angeordneten bituminösen Abdichtungsbahn verbunden, wobei die bituminöse Abdichtungsbahn zunächst thermisch behandelt, also zum Erweichen gebracht wird und das Element dann in diese weiche Abdichtungsbahn gedrückt wird. Nach dem Erhärten der Abdichtungsbahn ist das Element 10 auf der Fläche fixiert. Erfindungsgemäß ist es möglich, diesen Verbund aus Abdichtungsbahn und Element im industriellen Maßstab vorzufertigen. Dadurch lassen sich Dächer besonders einfach decken.

Die Krallschicht 18 dient zur Fixierung der Sprossen 14 und Sporen 14 der Moose gegen Abtragung durch Wind, Wasser und/oder Schädlinge.

Das Element 10 wird im industriellen Maßstab an einem anderen Ort als den eigentlichen Einsatzort hergestellt und befindet sich nach seiner Herstellung in einem nicht bewässerten, unbegrünten Zustand. Dadurch ist das Element 10 sehr leicht ausgebildet und kann entsprechend einfach in aufgerollter Form transportiert werden. Da Moose bzw. deren Sprossen und Sporen ohne Wasser in eine Ruhephase eintreten, kann das Element 10 über einen längeren Zeitraum gelagert werden.

Die Papierschicht 16 verhindert, dass die auf der Vliesschicht 12 angeordneten Moossprossen 14 und -sporen 14 beim Auf- bzw. Ausrollen des Elements 10 durch die Krallschicht 18 hindurch herausfallen können.

Das Element 10 wird nach seiner Aufbringung auf die genannte Fläche am Einsatzort künstlich oder natürlich bewässert, wodurch die Moossprossen 14 und -sporen 14 anfangen zu wachsen. Das Element 10 geht so in den begrünten Zustand über und führt zu einer Reduzierung des Feinstaubgehalts in der Luft.

Die physiologische Besonderheit von Moosen, Wasser und Nährstoffen über ihre Oberfläche aus der Atmosphäre aufzunehmen, macht eine zusätzliche Zugabe von Nährstoffen oder Boden nicht nötig.

### Bezugszeichenliste

### (ist Bestandteil der Beschreibung)

- 10: Element
- 12: wasseraufnehmende und/oder -speichernde Schicht
- 14: Sprossen und Sporen von Moose
- 16: Papierschicht
- 18: Krallschicht

## Patentansprüche

1. Element (10) zur Reduzierung des Feinstaubgehalts in der Luft, wobei das Element (10) eine auf eine plan liegende oder geneigte, künstliche oder natürliche Fläche aufgebrachte oder aufbringbare Unterlage ist, auf und/oder in der Moose und/oder Flechten bzw. deren Sprossen (14) und/oder Sporen (14) angeordnet und gegen Abtragung durch Wind, Wasser und/oder Schädlinge fixiert sind, wobei die Unterlage ein Vegetationsträger ist, der wenigstens eine *Schicht* (12) aus einem wasseraufnehmenden und/oder -speichernden Material, vorzugsweise aus Vlies oder Steinwolle, und eine *Krallschicht* (18) zur Fixierung der Moose und/oder Flechten bzw. ihrer Sprossen (14) und/oder Sporen (14) gegen Abtragung durch Wind, Wasser und/oder Schädlinge umfasst, wobei die Krallschicht (18) vorzugsweise der Schicht (12) aus wasseraufnehmendem und/oder -speicherndem Material aufliegt, wobei der Vegetationsträger zusätzlich eine *Papierschicht* (16) umfasst, die vorzugsweise den Moosen und/oder Flechten bzw. deren Sprossen (14) und/oder Sporen (14) sowie gegebenenfalls dem Saatgut ein- und/oder zweikeimblättriger Pflanzen aufliegt und besonders bevorzugt selbst von der Krallschicht (18) abgedeckt ist, wobei die Unterlage auf der Fläche durch geeignete Mittel, vorzugsweise durch Verkleben, durch thermische Behandlung oder durch mechanische Verbindungsmittel, befestigt oder befestigbar ist.

2. Element (10) nach Anspruch 1, **dadurch gekennzeichnet, dass** der Vegetationsträger eine zusätzliche Schicht aus einem wasserabweisenden Material umfasst, wobei die Schicht vorzugsweise eine bituminöse Abdichtung ist.

3. Element (10) nach Anspruch 1, **dadurch gekennzeichnet, dass** die Moose und/oder Flechten bzw. deren Sprossen (14) und/oder deren Sporen (14) direkt auf der Schicht (12) aus dem wasseraufnehmenden und/oder-speichernden Material angeordnet sind.

4. Element (10) nach Anspruch 1, **dadurch gekennzeichnet, dass** die Moose und/oder Flechten bzw. deren Sprossen (14) und/oder Sporen (14) auf und/oder in der Krallschicht (18) angeordnet sind.

5. Element (10) nach Anspruch 1 oder 4, **dadurch gekennzeichnet, dass** die Krallschicht (18) mit einem wasserspelchemden Material wenigstens teilweise verfüllt ist.

6. Element (10) nach einem der Ansprüche 1 bis 5, **dadurch gekennzeichnet, dass** der Vegetationsträger eine Dränageschicht umfasst, wobei die Drainageschicht vorzugsweise unterhalb der Schicht (12) aus wasseraufnehmendem und/oder - speicherndem Material angeordnet ist.

7. Element (10) nach Anspruch 6, **dadurch gekennzeichnet, dass** der Vegetationsträger eine weitere unterhalb der Dränage angeordnete Schicht (12) aus einem wasseraufnehmenden und/oder -speichernden Material zur Kondenswasserbildung umfasst.

8. Element (10) nach einem der Ansprüche 1 bis 7, **dadurch gekennzeichnet, dass** der Vegetationsträger Saatgut ein- und/oder zweikeimblättriger Pflanzen enthält, welches vorzugsweise in der gleichen Schicht wie die Moose und/oder Flechten bzw. deren Sprossen (14) und/oder Sporen (14) angeordnet ist.

9. Element (10) nach einem der Ansprüche 1 bis 8, **dadurch gekennzeichnet, dass** der Vegetationsträger Nährstoffe enthält, die vorzugsweise in der Schicht (12) aus wasseraufnehmendem und/oder -speicherndem Material eingebracht sind.

10. Element (10) nach einem der Ansprüche 1 bis 9, **dadurch gekennzeichnet, dass** Vegetationsträger wenigstens ein Material zur Brandschutzverbesserung umfasst.

11. Element (10) nach einem der Ansprüche 1 bis 10, **dadurch gekennzeichnet, dass** der Vegetationskörper an seiner Unterseite ein System zur Bewässerung der Moose und/oder Flechten bzw. ihrer Sprossen (14) und/oder Sporen (14) sowie gegebenenfalls des Saatguts ein- und/oder zweikeimblättriger Pflanzen umfasst.

12. Element (10) nach einem der Ansprüche 1 bis 11, **dadurch gekennzeichnet, dass** die einzelnen Schichten des Elements (10) bzw. dessen Materialien vorzugsweise durch Versteppen miteinander verbunden sind.

13. Element (10) nach einem der Ansprüche 1 bis 12, **dadurch gekennzeichnet, dass** das Element (10) entweder am Einsatzort, vorzugsweise aber an einem anderen Ort herstellbar sowie lagerbar und erst bei Bedarf zum Einsatzort transportierbar ist.

14. Element (10) nach Anspruch 2, **dadurch gekennzeichet**, dass die Schicht aus wasserabweisendem Material als unterste Schicht des Vegetationsträgers angeordnet und vorzugsweise mit diesem fest verbunden ist, wobei das Element vorzugsweise im industriellen Maßstab vorfertigbar ist.

15. Element (10) nach einem der Ansprüche 1 bis 14, **dadurch gekennzeichnet, dass** sich das Element (10) bis zu seiner Aufbringung auf die Fläche und anschließender Bewässerung am Einsatzort in einem unbegrünten Zustand befindet.

16. Element (10) nach einem der Ansprüche 1 bis 15, **dadurch gekennzeichnet, dass** das Element (10) mattenartig ausgebildet und zur Lagerung und zum Transport aufrollbar ist.

17. Element (10) nach einem der Ansprüche 1 bis 16, **dadurch gekennzeichnet, dass** die Fläche ein Dach, eine Mauer oder ein Gleisbett ist.

18. Element (10) nach einem der Ansprüche 1 bis 17, **dadurch gekennzeichnet, dass** die Moose aus den systematischen Gruppen der akrokarpen und pleurokarpen Laubmoose ausgewählt sind, die aus den Gattungen Brachythecium, Bryum, Barbula, Funaria, Dicranoweisia, Dlcranum, Grimmia, Ceratodon, Homalothecium, Tortula, Abietinella, Hypnum, Rhytidium, Racomitrium und Polytrichum bestehen, und vorzugsweise Mischungen aus akrokarpen Moosen, nämlich aus Bryum, Barbula, Dicranoweisia, Dicranum, Funaria, Grimmia, Ceratodon, Polytrichum und/oder Tortula, besonders bevorzugt Mischungen aus pleurokarpen Moosen, nämlich aus Hypnum, Rhytidium, Brachythecium und/oder Homalothecium, sind.

19. Element (10) nach Anspruch 18, **dadurch gekennzeichnet, dass** die Moose aus der Gruppe ausgewählt sind, die aus den Gattungen Hypnum, Tortula, Brachythecium und Bryum besteht, und vorzugsweise Mischungen aus Bryum und Tortula, besonders bevorzugt Mischungen aus Hypnum und Brachythecium sind.

20. Element (10) nach Anspruch 18, **dadurch gekennzeichnet, dass** die Moose aus der Gruppe ausgewählt sind, die aus den Gattungen Ceratodon, Barbula, Bryum, Funaria und Polytrichum besteht, vorzugsweise nur Polytrichum, besonders bevorzugt Mischungen aus Ceratodon, Barbula, Bryum und Funaria sind.

21. Element (10) nach Anspruch 18, **dadurch gekennzeichnet, dass** die Moose aus der Gruppe ausgewählt sind, die aus den Gattungen Abietinella, Hypnum, Rhytidium, Racomitrium, Grimmia und Homalothecium besteht, und vorzugsweise Mischungen aus Grimmia und Racomitrium, besonders bevorzugt Mischungen aus Rhytidium, Abietinella und Homalothecium sind.

22. Element (10) nach Anspruch 18, **dadurch gekennzeichnet, dass** die Moose aus der Gruppe ausgewählt sind, die aus den Gattungen Dicranoweisia, Dicranum, Ceratodon und Bryum besteht, und vorzugsweise Mischungen aus Dicranoweisia und Dicranum, besonders bevorzugt Mischungen aus Bryum und Ceratodon sind.

23. Element (10) nach einem der Ansprüche 1 bis 17, **dadurch gekennzeichnet, dass** die Flechten aus der Gruppe ausgewählt sind, die aus den Gattungen Cladina, Cladonia, Xanthoria, Parmelia, Physcia, Hypogymnia, Peltigera, Evernia, Pseudevernia, Ramalina und Cetraria besteht,

24. Element (10) nach Anspruch 23, **dadurch gekennzeichnet, dass** die Flechten aus der Gruppe ausgewählt sind, die aus den Gattungen Cladina und Cladonia besteht.

25. Element (10) nach Anspruch 23, **dadurch gekennzeichnet, dass** die Flechten aus der Gruppe ausgewählt sind, die aus den Gattungen Cladina, Cladonia, Xanthoria, Hypogymnia und Parmelia besteht, und vorzugsweise Mischungen aus Xanthoria, Hypogynmnia und Parmelia, besonders bevorzugt Mischungen aus Cladonia und Cladina sind.

26. Element (10) nach Anspruch 23, **dadurch gekennzeichnet, dass** die Flechten aus der Gruppe ausgewählt sind, die aus den Gattungen Peltigera, Pseudevernia, Ramalina und Evernia besteht, und vorzugsweise Peltigera, besonders bevorzugt Mischungen aus Pseudevernia, Ramalina und Evernia sind.

27. Element (10) nach Anspruch 23, **dadurch gekennzeichnet, dass** die Flechten aus der Gruppe ausgewählt sind, die aus den Gattungen Physcia, Parmelia, Phaeophyscia und Xanthoria besteht, und vorzugsweise Mischungen aus Phaeophyscia und Parmelia, besonders bevorzugt Mischungen aus Xanthoria und Physcia sind.

## Claims

1. An element (10) for reducing the particulate matter content of the air, wherein the element (10) is a base applied or able to be applied onto a flat-lying or inclined artificial or natural surface, on and/or in which base mosses and/or lichens or shoots (14) and/or spores (14) thereof are arranged and are retained so not to be removed by wind, water and/or pests, wherein the base is a vegetation carrier, which includes at least one *layer* (12) made of a water-absorbing and/or water-retentive material, preferably made of fleece or mineral wool, and a *cling layer* (18) for retaining the mosses and/or lichens or their shoots (14) and/or spores (14) against removal by wind, water and/or pests, wherein the cling layer (18) preferably rests on the layer (12) made of water-absorbing and/or water-retentive material, wherein the vegetation carrier additionally includes a *paper layer* (16), which preferably rests on the mosses and/or lichens or the shoots (14) and/or spores (14) thereof as well as possibly on the seeds of monocotyledonous and/or dicotyledonous plants and particularly preferably is itself covered by the cling layer (18), wherein the base is attached or able to be attached onto the surface by suitable means, preferably by gluing, by heat treatment or by mechanical connection means.

2. The element (10) according to Claim 1, **characterised in that** the vegetation carrier includes an additional layer made of a water-repellent material, wherein the layer is preferably a bituminous seal.

3. The element (10) according to Claim 1, **characterised in that** the mosses and/or lichens or the shoots (14) thereof and/or the spores thereof (14) are arranged directly on the layer (12) made of the water-absorbing and/or water-retentive material.

4. The element (10) according to Claim 1, **characterised in that** the mosses and/or lichens or the shoots (14) and/or spores (14) thereof are arranged on and/or in the cling layer (18).

5. The element (10) according to Claim 1 or 4, **characterised in that** the cling layer (18) is at least partially filled with a water-retentive material.

6. The element (10) according to one of claims 1 to 5, **characterised in that** the vegetation carrier includes a drainage layer, wherein the drainage layer is preferably arranged beneath the layer (12) made of water-absorbing and/or water-retentive material.

7. The element (10) according to Claim 6, **characterised in that** the vegetation carrier includes a further layer (12) which is arranged beneath the drainage and which is made of a water-absorbing and/or water-retentive material to form condensed water.

8. The element (10) according to one of claims 1 to 7, **characterised in that** the vegetation carrier contains seeds of monocotyledonous and/or dicotyledonous plants, which seeds are preferably arranged in the same layer as the mosses and/or lichens or the shoots (14) and/or spores (14) thereof.

9. The element (10) according to one of claims 1 to 8, **characterised in that** the vegetation carrier contains nutrients which are preferably introduced into the layer (12) made of water-absorbing and/or water-retentive material.

10. The element (10) according to one of claims 1 to 9, **characterised in that** vegetation carrier includes at least a material to improve fire protection.

11. The element (10) according to one of claims 1 to 10, **characterised in that** the vegetation body includes at its underside a system for irrigating the mosses and/or lichens or their shoots (14) and/or spores (14) as well as possibly the seeds of monocotyledonous and/or dicotyledonous plants.

12. The element (10) according to one of claims 1 to 11, **characterised in that** the individual layers of the element (10) or rather the materials thereof are connected to one another preferably by stitching.

13. The element (10) according to one of claims 1 to 12, **characterised in that** the element (10) can either be manufactured at the location of use, but preferably can be manufactured at another location and can be stored and can be transported to the location of use only when needed.

14. The element (10) according to Claim 2, **characterised in that** the layer made of water-repellent material is arranged as the lowest layer of the vegetation carrier and is preferably firmly connected to it, wherein the element can preferably be prefabricated on an industrial scale.

15. The element (10) according to one of claims 1 to 14, **characterised in that** the element (10) is in an unvegetated state until it is applied onto the surface and then irrigated at the location of use.

16. The element (10) according to one of claims 1 to 15, **characterised in that** the element (10) is configured as a mat and is able to be rolled up for storage and transportation.

17. The element (10) according to one of claims 1 to 16, **characterised in that** the surface is a roof, a wall or a track bed.

18. The element (10) according to one of claims 1 to 17, **characterised in that** the mosses are selected from the systematic groups of the acrocarpous and pleurocarpous bryophyta which consist of the genera Brachythecium, Bryum, Barbula, Funaria, Dicranoweisia, Dicranum, Grimmia, Ceratodon, Homalothecium, Tortula, Abietinella, Hypnum, Rhytidium, Racomitrium and Polytrichum, and are preferably mixtures of acrocarpous mosses, namely of Bryum, Barbula, Dicranoweisia, Dicranum, Funaria, Grimmia, Ceratodon, Polytrichum and/or Tortula, particularly preferably mixtures of pleurocarpous mosses, namely of Hypnum, Rhytidium, Brachythecium and/or Homalothecium.

19. The element (10) according to Claim 18, **characterised in that** the mosses are selected from the group which consists of the genera Hypnum, Tortula, Brachythecium and Bryum, and are preferably mixtures of Bryum and Tortula, particularly preferably mixtures of Hypnum and Brachythecium.

20. The element (10) according to Claim 18, **characterised in that** the mosses are selected from the group which consists of the genera Ceratodon, Barbula, Bryum, Funaria and Polytrichum, are preferably only Polytrichum, particularly preferably mixtures of Ceratodon, Barbula, Bryum and Funaria.

21. The element (10) according to Claim 18, **characterised in that** the mosses are selected from the group which consists of the genera Abietinella, Hypnum, Rhytidium, Racomitrium, Grimmia and Homalothecium and are preferably mixtures of Grimmia and Racomitrium, particularly preferably mixtures of Rhytidium, Abietinella and Homalothecium.

22. The element (10) according to Claim 18, **characterised in that** the mosses are selected from the group which consists of the genera Dicranoweisia, Dicranum, Ceratodon and Bryum, and are preferably mixtures of Dicranoweisia and Dicranum, particularly preferably mixtures of Bryum and Ceratodon.

23. The element (10) according to one of claims 1 to 17, **characterised in that** the lichens are selected from the group which consists of the genera Cladina, Cladonia, Xanthoria, Parmelia, Physcia, Hypogymnia, Peltigera, Evernia, Pseudevernia, Ramalina and Cetraria.

24. The element (10) according to Claim 23, **characterised in that** the lichens are selected from the group which consists of the genera Cladina and Cladonia.

25. The element (10) according to Claim 23, **characterised in that** the lichens are selected from the group which consists of the genera Cladina, Cladonia, Xanthoria, Hypogymnia and Parmelia, and are preferably mixtures of Xanthoria, Hypogymnia and Parmelia, particularly preferably mixtures of Cladonia and Cladina.

26. The element (10) according to Claim 23, **characterised in that** the lichens are selected from the group which consists of the genera Peltigera, Pseudevernia, Ramalina and Evernia, and are preferably Peltigera, particularly preferably mixtures of Pseudevernia, Ramalina and Evernia.

27. The element (10) according to Claim 23, **characterised in that** the lichens are selected from the group which consists of the genera Physcia, Parmelia, Phaeohyscia and Xanthoria, and are preferably mixtures of Phaeophyscia and Parmelia, particularly preferably mixtures of Xanthoria and Physcia.

## Revendications

1. Elément (10) servant à la réduction de la teneur en fine poussière dans l'air, l'élément (10) étant un support appliqué ou applicable sur une surface plane ou inclinée, artificielle ou naturelle, sur ou dans laquelle des mousses et/ou lichens, c'est-à-dire leurs pousses (14) et/ou spores (14) sont disposés et fixés pour empêcher l'enlèvement par le vent, l'eau et/ou les insectes parasites, le support étant un support de végétation qui comprend au moins une *couche* (12) en un matériau absorbant et/ou stockant l'eau, de préférence en non tissé ou laine de roche et une *couche d'accrochage* (18) pour la fixation des mousses et/ou lichens, c'est-à-dire de leurs pousses (14) et/ou spores (14) pour empêcher l'enlèvement par le vent, l'eau et/ou les insectes parasites, la couche d'accrochage (18) reposant de préférence sur la couche (12) en matériau absorbant et/ou stockant l'eau, le support de végétation comprenant en plus une *couche de papier* (16) qui repose de préférence sur les mousses et/ou lichens, c'est-à-dire sur leurs pousses (14) et/ou spores (14) ainsi que, le cas échéant, sur les semences de monocotylédones et/ou dicotylédones, et est plus préférentiellement elle-même recouverte de la couche d'accrochage (18), le support étant fixé ou fixable sur la surface à l'aide de moyens appropriés, de préférence par collage, par traitement thermique ou par des moyens d'assemblage mécaniques.

2. Elément (10) suivant la revendication 1, **caractérisé en ce que** le support de végétation comprend une couche supplémentaire en un matériau hydrophobe, la couche étant de préférence une couche étanche bitumineuse.

3. Elément (10) suivant la revendication 1, **caractérisé en ce que** les mousses et/ou lichens, c'est-à-dire leurs pousses (14) et/ou spores (14) sont disposés directement sur la couche (12) en matériau absorbant et/ou stockant l'eau.

4. Elément (10) suivant la revendication 1, **caractérisé en ce que** les mousses et/ou lichens, à savoir leurs pousses (14) et/ou spores (14) sont disposés sur/ou dans la couche d'accrochage (18).

5. Elément (10) suivant la revendication 1 ou 4, **caractérisé en ce que** la couche d'accrochage (18) est remplie au moins partiellement d'un matériau stockant l'eau.

6. Elément (10) suivant une des revendications 1 à 5, **caractérisé en ce que** le support de végétation comprend une couche de drainage, la couche de drainage étant disposée de préférence sous la couche (12) en matériau absorbant et/ou stockant l'eau.

7. Elément (10) suivant la revendication 6, **caractérisé en ce que** le support de végétation comprend une autre couche (12) qui est disposée au-dessous du drainage et qui est en matériau absorbant et/ou stockant l'eau pour la formation d'eau de condensation.

8. Elément (10) suivant une des revendications 1 à 7, **caractérisé en ce que** le support de végétation contient des semences de monocotylédones et/ou dicotylédones qui sont disposées de préférence dans la même couche que les mousses et/ou lichens, c'est-à-dire leurs pousses (14) et/ou spores (14).

9. Elément (10) suivant une des revendications 1 à 8, **caractérisé en ce que** le support de végétation contient des substances nutritives qui sont de préférence incorporées dans la couche (12) en matériau absorbant et/ou stockant l'eau.

10. Elément (10) suivant une des revendications 1 à 9, **caractérisé en ce que** le support de végétation comprend au moins un matériau améliorant la protection anti-feu.

11. Elément (10) suivant une des revendications 1 à 10, **caractérisé en ce que** le corps de végétation comprend sur sa face inférieure un système d'irrigation des mousses et/ou lichens, c'est-à-dire de leurs pousses (14) et/ou spores (14) ainsi que, le cas échéant, des semences de monocotylédones et/ou dicotylédones.

12. Elément (10) suivant une des revendications 1 à 11, **caractérisé en ce que** les différentes couches de l'élément (10), à savoir leurs matériaux sont reliés entre eux de préférence par piquage.

13. Elément (10) suivant une des revendications 1 à 11, **caractérisé en ce que** l'élément (10) peut être fabriqué et est stockable soit au lieu d'utilisation, soit, de préférence, à un autre endroit et transportable au lieu d'utilisation seulement en cas de besoin.

14. Elément (10) suivant la revendication 2, **caractérisé en ce que** la couche en matériau hydrophobe est disposée de manière à former la couche la plus en bas du support de végétation, auquel elle est de préférence reliée de manière fixe, l'élément pouvant être préfabriqué de préférence à l'échelle industrielle.

15. Elément (10) suivant une des revendications 1 à 14, **caractérisé en ce que** l'élément (10) se trouve en état non gazonné jusqu'à son application sur la surface, puis son irrigation sur le lieu d'utilisation.

16. Elément (10) suivant une des revendications 1 à 15, **caractérisé en ce que** l'élément (10) est conçu en forme de mat et peut être roulé pour le stockage et le transport.

17. Elément (10) suivant une des revendications 1 à 16, **caractérisé en ce que** la surface est une toiture, un mur ou un ballast de voie ferrée.

18. Elément (10) suivant une des revendications 1 à 17, **caractérisé en ce que** les mousses sont choisies parmi les groupes systématiques des bryophytes acrocarpes et pleurocarpes qui sont constitués par les genres brachythecium, bryum, barbula, funaria, dicranoweisia, dicranum, grimmia, ceratodon, homalothecium, tortula, abietinella, hypnum, rhytidium, racomitrium et polytrichum, de préférence les mélanges de mousses acrocarpes, notamment de bryum, barbula, dicranoweisia, dicranum, funaria, grimmia, ceratodon, polytrichum et/ou tortula, plus préférentiellement les mélanges de mousses pleurocarpes, notamment hypnum, rhytidium, brachythecium et/ou homalothecium.

19. Elément (10) suivant la revendication 18, **caractérisé en ce que** les mousses sont choisies parmi le groupe qui est constitué des genres hypnum, tortula, brachythecium et bryum, de préférence les mélanges des genres bryum et tortula, plus préférentiellement les mélanges des genres hypnum et brachythecium.

20. Elément (10) suivant la revendication 18, **caractérisé en ce que** les mousses sont choisies parmi le groupe qui est constitué des genres ceratodon, barbula, bryum, funaria et polytrichum, de préférence uniquement le genre polytrichum, plus préférentiellement les mélanges des genres ceratodon, barbula, bryum et funaria.

21. Elément (10) suivant la revendication 18, **caractérisé en ce que** les mousses sont choisies parmi le groupe qui est constitué des genres abietinella, hypnum, rhytidium, racomitrium, grimmia et homalothecium, de préférence les mélanges des genres grimmia et racomitrium, plus préférentiellement les mélanges des genres rhytidium, abietinella et homalothecium.

22. Elément (10) suivant la revendication 18, **caractérisé en ce que** les mousses sont choisies parmi le groupe qui est constitué des genres dicranoweisia, dicranum, ceratodon et bryum, de préférence les mélanges des genres dicranoweisia et dicranum, plus préférentiellement les mélanges des genres bryum et ceratodon.

23. Elément (10) suivant une des revendications 1 à 17, **caractérisé en ce que** les lichens sont choisis parmi le groupe constitué des genres cladina, cladonia, xanthoria, parmelia, physica, hypogymnia, peltigera, evernia, pseudoevernia, ramalina et cetraria.

24. Elément (10) suivant la revendication 23, **caractérisé en ce que** les lichens sont choisis parmi le groupe constitué des genres cladina et cladonia.

25. Elément (10) suivant la revendication 23, **caractérisé en ce que** les lichens sont choisis parmi le groupe constitué des genres cladina, cladonia, xanthoria, hypogymnia et parmelia, de préférence les mélanges des genres xanthoria, hypogymnia et parmelia, plus préférentiellement les mélanges des genres cladonia et cladina.

26. Elément (10) suivant la revendication 23, **caractérisé en ce que** les lichens sont choisis parmi le groupe qui est constitué des genres peltigera, pseudevernia, ramalina et evernia, de préférence le genre peltigera, plus préferentiellement les mélanges des genres pseudevernia, ramalina et evernia.

27. Elément (10) suivant la revendication 23, **caractérisé en ce que** les lichens sont choisis parmi le groupe qui est constitué par les genres physcia, parmelia, phaeophyscia et xanthoria, de préférence les mélanges des genres phaeophyscia et parmelia, plus préférentiellement les mélanges des genres xanthoria et physcia.
